# EUROPÄISCHE PATENTANMELDUNG

(11) **EP 0 989 323 A2**
(43) Veröffentlichungstag der Anmeldung: **29.03.2000**
(21) Anmeldenummer: 99115735.5
(22) Anmeldetag: 10.08.1999
(51) Int. Cl.: F16D 67/06

(54) **Schlingfederkupplung**

(30) Priorität: 25.09.1998 CH 195698
(71) Anmelder: Baumann Federn AG, 8630 Rüti (CH)
(72) Erfinder: Iten, Peter, 8712 Stäfa (CH)
(74) Vertreter: Troesch Scheidegger Werner AG

(57) **Zusammenfassung**

Bei der elektromagnetisch geschalteten Schlingfederkupplung ist zusätzlich zu der zwischen Antriebswelle (3) und Abtriebswelle (4) wirksamen Kupplungsfeder (8) auf der Abtriebswelle (4) eine als Schlingfeder ausgestaltete Bremsfeder (14) vorgesehen, welche ebenfalls vom Steuermagneten (11) geschaltet wird, derart dass bei erregtem Magneten die Abtriebswelle (4) freigegeben wird, bei stromlosem Magneten jedoch die Abtriebswelle (4) sofort abgebremst und in Richtung des Antriebes blockiert wird.

## Beschreibung

Die vorliegende Erfindung betrifft eine elektromagnetisch geschaltete Schlingfederkupplung zwischen einer Antriebs- und einer Abtriebswelle, mit einer eine Kupplungsfeder bildenden Schlingfeder, welche mit einem ersten Abschnitt mit Reibschluss auf der Antriebswelle aufliegt, während ein zweiter Abschnitt die koaxial angeordnete Abtriebswelle umschliesst, und einem Steuermagneten, welcher bei Erregung die Schlingfeder in Reibschluss mit der Abtriebswelle bringt und bei Nichterregung diesen Reibschluss wieder freigibt.

Elektromagnetisch geschaltete Schlingfederkupplungen sind bekannt. In den Patentschriften US 5 031744, US 5 127 502, US 5 099 974, US 4 321 992 sind solche Lösungen u.a. beschrieben. Allen diesen Lösungen ist gemeinsam, dass die Abtriebseite in beiden Drehrichtungen frei ist, wenn die Spule nicht erregt (also stromlos) ist.

Es gibt jedoch Anwendungsfälle von Antrieben, in denen die Abtriebsseite gebremst sein soll, d.h. wenn ausgekuppelt wird, soll die Last möglichst rasch gebremst werden, ohne dass durch die vorhandene Massenträgheit die Abtriebsseite weiter dreht und je nach Reibungswiderstand mehr oder weniger lange ausläuft.

Aufgabe der vorliegenden Erfindung ist es, eine Schlingfederkupplung zu schaffen, welche dem vorstehend genannten Bedürfnis Rechnung trägt.

Die nachfolgend beschriebene Erfindung löst diese Aufgabe derart, dass die Last nach dem Auskuppeln in kürzester Zeit gebremst wird, der Abtrieb jedoch ggf. im gebremsten und ausgekuppelten Zustand in der der Antriebsrichtung entgegengesetzten Richtung zurückgedreht werden kann.

Die konstruktive Lösung bei einer Schlingfederkupplung der eingangs definierten Art zeichnet sich erfindungsgemäss durch die Merkmale gemäss dem kennzeichnenden Teil von Anspruch 1 aus.

Besonders vorteilhafte Ausführungsformen sind in den abhängigen Ansprüchen definiert.

Die Erfindung wird nachstehend anhand eines in der Zeichnung dargestellten Ausführungsbeispiels noch etwas näher erläutert. Es zeigen:
Fig. 1 einen Längsschnitt durch eine erfindungsgemässe Schlingfederkupplung, und
Fig. 2 einen Querschnitt durch Linie A-A von Fig. 1.

Die Kupplung besteht aus dem Gehäuse 1, welches über den Flansch 2 in einem Aufbau montiert wird. Als Antrieb dient die Welle 3, welche einerseits im Gehäuse 1 mit einem Wälzlager 5 und an der Abtriebswelle 4 im Lager 7 gelagert ist. Die Abtriebswelle 4 ist über das Lager 6 und den Flansch 21 im Gehäuse 1 gelagert. Der Flansch 21 ist im Gehäuse 1 eingepresst und gegen Verdrehung gesichert.

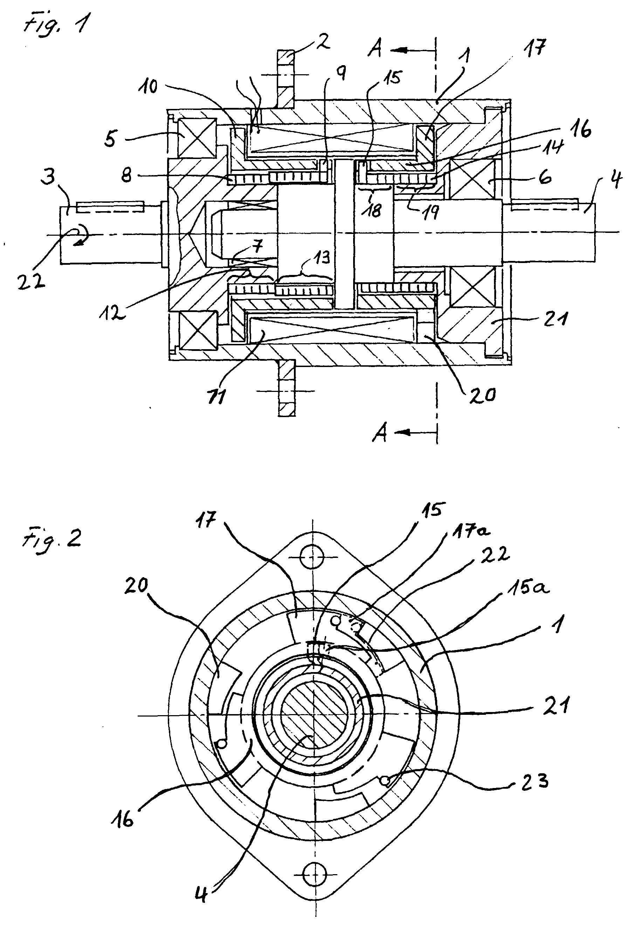

Im dargestellten Beispiel der Figur 1 ist die Drehrichtung, betrachtet auf die Antriebswelle, rechts (Uhrzeigersinn). Figur 1 zeigt zudem den stromlosen Zustand der Spule 11.

Die eine Schlingfeder 8 dient als Kupplungsfeder. Sie wird mit Vorspannung auf der Antriebswelle 3 montiert, d.h. der ungespannte Innendurchmesser der Kupplungsfeder ist im Bereich 12 kleiner als der entsprechende Wellendurchmesser. Im Bereich 13 der Abtriebswelle 4 ist der ungespannte Federinnendurchmesser der Kupplungsfeder grösser als der Wellendurchmesser. Damit ist in diesem Bereich eine vollständige Trennung zwischen Antrieb und Abtrieb gewährleistet.

Die Bremsfeder 14 weist einen ungespannten Innendurchmesser auf, welcher kleiner ist als die beiden Wellendurchmesser 18 und 19 der Abtriebswelle 4 und des Flansches 21. Die Bremsfeder ist zudem so gestaltet, dass sie die Abtriebswelle 4 in der Drehrichtung des Antriebes in dieser Darstellung im Uhrzeigersinn sperrt bzw. bremst.

Der Kupplungsvorgang kann nur erfolgen, wenn die Antriebswelle dreht. Dabei wird die sich drehende Kupplungsfeder 8 ebenfalls mitgedreht, und auch die Hülse 10, da diese im radial nach aussen abgebogenen Federende 9 eingehängt wird. Wenn die Spule 11 erregt wird, wird die Hülse 10 gebremst, bis der Luftspalt zwischen Kupplungsfeder und Abtriebswelle 4 im Bereich 13 geschlossen ist. Ist dies der Fall, entsteht Reibschluss zwischen Kupplungsfeder 8 und Abtriebswelle 4.

Ein Einkuppeln ist jedoch nur dann möglich, wenn gleichzeitig mit der Erregung der Spule 11 auch die Bremsfeder 14 geöffnet oder gelüftet und das Federende 15 in die Position 15a gebracht wird. Dazu sind nur 5 bis 10° Öffnungswinkel notwendig. Diese Bewegung wird dadurch erreicht, indem stirnseitig an der Spule 11 ein Ankerkörper 20 angebracht wird, in den eine Anzahl (z.B. drei) Segmente 17 der Hülse 16 eingreifen. Die Erregung der Spule bewirkt nun eine Magnetkraft zwischen den Stirnseiten der Segmente 17 und des Ankerkörpers 20, welche die Hülse 16 um den erforderlichen Winkel von 5 bis 10° verdreht, da das Federende 15 der Bremsfeder 14 in dieser Hülse 16 formschlüssig eingehängt ist, die Wirkung der Bremsfeder 14 damit aufhebt, und die Kupplungsfeder 8 überträgt die Drehbewegung auf die Abtriebswelle 4.

Zwischen den beiden Flächen von Segment 17 und Ankerkörper 20 muss ein kleiner Luftspalt 22 eingestellt werden, damit keine metallische Berührung zwischen diesen beiden Teilen stattfinden kann. Die Begrenzung dieser Position erfolgt mit dem in Segment 17 eingelegten Dämpfungselement 23, welches durch geeignete Materialwahl eine metallische Verbindung verhindert und gleichzeitig dämpfend wirkt.

Wird die Erregung der Spule abgeschaltet, öffnet sich die Kupplungsfeder 8 und kuppelt aus. Gleichzeitig dreht sich die Hülse 16 selbständig durch die Bremsfeder 14, da sie wie eine Torsionsfeder gespannt wurde, in die Position zurück, bremst die Abtriebswelle 4 ab und blockiert anschliessend die Abtriebswelle 4 wiederum in der Antriebsrichtung. In der entgegengesetzten Drehrichtung kann die Abtriebswelle 4 jedoch gedreht werden, da die Bremsfeder 14 nur eine Drehrichtung sperren kann.

## Patentansprüche

1. Schlingfederkupplung zwischen einer Antriebs- und einer Abtriebswelle, mit einer eine Kupplungsfeder bildenden Schlingfeder, welche mit einem ersten Abschnitt mit Reibschluss auf der Antriebswelle aufliegt, während ein zweiter Abschnitt die koaxial angeordnete Abtriebswelle umschliesst, und einem Steuermagneten, welcher bei Erregung die Schlingfeder in Reibschluss mit der Abtriebswelle bringt und bei Nichterregung diesen Reibschluss wieder freigibt, dadurch gekennzeichnet, dass die Abtriebswelle zusätzlich von einer Bremsfeder umschlossen ist, welche bei nicht erregtem Steuermagneten die Abtriebswelle in ihrer Antriebsrichtung sperrt, die Sperre jedoch bei Erregung des Steuermagneten aufgehoben wird.

2. Schlingfederkupplung nach Anspruch 1, dadurch gekennzeichnet, dass die Bremsfeder derart ausgestaltet und angeordnet ist, dass sie die Abtriebswelle bei nicht erregtem Steuermagneten lediglich in Drehrichtung des Antriebes zu sperren vermag.

3. Schlingfederkupplung nach Anspruch 1 und 2, dadurch gekennzeichnet, dass die Bremsfeder mit einem ersten Abschnitt die Abtriebswelle umschliesst und mit einem zweiten Abschnitt auf einem die Abtriebswelle umfassenden stationären Flansch verdrehtest aufliegt, und dass Mittel vorgesehen sind, um bei Erregung des Steuermagneten den ersten Abschnitt der Bremsfeder entgegen der Federwirkung zu verdrehen und damit die Bremsfeder über der Abtriebswelle zu öffnen.

4. Schlingfederkupplung nach Anspruch 3, dadurch gekennzeichnet, dass die genannten Mittel eine drehbare Hülse umfassen, in welcher der erste Bremsfederabschnitt verankert ist und welche Hülse Segmente aufweist, deren Stirnseiten in einen Ankerkörper eingreifen und mit dem Ankerkörper zusammenwirken, derart, dass bei Erregung des Steuermagneten die Hülse um einen vorbestimmten Öffnungswinkel, z.B. um 5-10°, verdreht wird, um die Bremsfeder von der Abtriebsfeder zu lösen, wobei bei Aufheben der Magneterregung die Bremsfeder selbsttätig in ihre die Abtriebswelle sperrende Lage zurückkehrt.
